# EUROPEAN PATENT APPLICATION

(11) **EP 4 793 668 A1**
(43) Date of publication of application: **19.08.2026**
(21) Application number: 25209999.9
(22) Date of filing: 21.10.2025
(51) Int. Cl.: G01S 19/07, G01S 19/43

(54) **METHODS AND APPARATUS FOR REAL-TIME KINETIC POSITIONING WITH A MOBILE BASE STATION**

(30) Priority: 13.02.2025 US 202519053181
(71) Applicant: The Boeing Company, Arlington, VA 22202 (US)
(72) Inventor: Gritter, Richard James, Arlington, 22202 (US); Schweighart, Samuel, Arlington, 22202 (US)
(74) Representative: Witte, Weller & Partner Patentanwälte mbB

(57) **Abstract**

Method and apparatus for real-time kinetic (RTK) positioning with a mobile base station (102) are disclosed. An example apparatus to generate virtual reference station (VRS) observations includes interface circuitry communicatively coupled to a receiver of a mobile base station, machine-readable instructions, and at least one processor circuit to be programmed by the machine-readable instructions to determine a variation in reception of global navigation satellite system (GNSS) signals between the mobile base station and a VRS (104), generate the VRS observations based on the determined variation, and cause transmission of the VRS observations to a rover platform (106a, 106b, 106c) for RTK navigation thereof.

## Description

### FIELD OF THE DISCLOSURE

This disclosure relates generally to navigation and, more particularly, to method and apparatus for real-time kinetic positioning with a mobile base station.

### BACKGROUND

Real-Time Kinematic (RTK) positioning is utilized in known systems as a relatively low-cost alternative for providing centimeter(cm) level navigation data. In known systems, RTK implementations necessitate a fixed base station with a known position to broadcast its raw observations (i.e., its "corrections") to a rover in the near vicinity. However, fixed base stations may not be readily available, and establishing a temporary base station may not be practical.

### SUMMARY

An example apparatus to generate virtual reference station (VRS) observations includes interface circuitry communicatively coupled to a receiver of a mobile base station, machine-readable instructions, and at least one processor circuit to be programmed by the machine-readable instructions to determine a variation in reception of global navigation satellite system (GNSS) signals between the mobile base station and a VRS, generate the VRS observations on the determined variation, and cause transmission of the VRS observations to a rover platform for navigation thereof.

An example at least one non-transitory machine-readable medium includes machine-readable instructions to cause at least one processor circuit to at least determine a variation in reception of global navigation satellite system (GNSS) signals between a mobile base station and a virtual reference station (VRS), generate VRS observations based on the determined variation, and cause a transmitter to provide the VRS observations to a rover platform for navigation thereof.

An example method includes determining a variation in reception of global navigation satellite system (GNSS) signals between a mobile base station and a virtual reference station (VRS), generating VRS observations based on the determined variation, and transmitting the VRS observations to a rover platform for navigation thereof.

### BRIEF DESCRIPTION OF THE DRAWINGS

FIG. 1 is an example navigation system in accordance with teachings of this disclosure.
FIG. 2 is a schematic overview of an example communication system that can be implemented in examples disclosed herein.
FIG. 3 is an example process flow that can be implemented in examples disclosed herein.
FIG. 4 is a block diagram of an example implementation of an example navigation analysis system that can be implemented in examples disclosed herein.
FIGS. 5 and 6 are flowcharts representative of example machine readable instructions and/or example operations that may be executed, instantiated, and/or performed by example programmable circuitry to implement the navigation analysis system of FIG. 4.
FIG. 7 is a block diagram of an example processing platform including programmable circuitry structured to execute, instantiate, and/or perform the example machine readable instructions and/or perform the example operations of FIGS. 5 and 6 to implement the navigation analysis system of FIG. 4.
FIG. 8 is a block diagram of an example implementation of the programmable circuitry of FIG. 7.
FIG. 9 is a block diagram of another example implementation of the programmable circuitry of FIG. 7.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

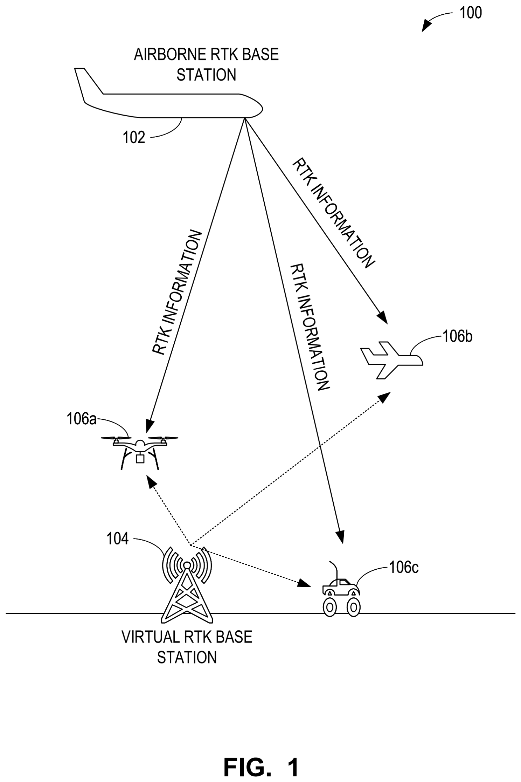

FIG. 1 is an example navigation system 100 in accordance with teachings of this disclosure. According to the illustrated example of FIG. 1, a mobile base station 102, which is implemented as an aircraft and/or an airborne platform in this example, defines a virtual reference station (VRS) 104. In particular, the mobile base station 102 is communicatively coupled to rover platforms (e.g., rovers, guided vehicles, mobile platforms, vehicles, etc.) 106 (hereinafter rover platforms 106a, 106b, 106c, etc.) such that the mobile base station 102 transmits signals to the rover platforms 106a, 106b, 106c. In this example, the rover platform 106a is an unmanned aerial vehicle (UAV), the rover platform 106b is a manned aircraft, and the rover platform 106c is a ground-based vehicle (e.g., a ground-based unmanned vehicle, an automobile, a truck, a van, a bus, a train or other rail-based vehicle, a tank or other military vehicle, a hovercraft, etc.). However, any other vehicle, rover or movable platform can be implemented instead including, but not limited to, submersibles, spacecraft, projectiles, etc. While the mobile base station 102 is implemented in an airborne platform in this example, the mobile base station 102 can be implemented as any appropriate moving platform such as, but not limited to, seacraft, spacecraft, submersibles, etc. While three of the rover platforms 106 are shown, any other appropriate number of the rover platforms 106 can be implemented instead (e.g., one, two, four, five, ... ten, ... fifty, etc.).

In this example, the rover platforms 106a, 106b, 106c each include at least one receiver (e.g., an RTK-enable GNSS receiver, etc.) to receive GNSS signals and VRS signals for navigation thereof. In known systems, RTK-enabled GNSS receivers of vehicles typically receive observations from a corresponding RTK base station that is stationary (for precision positioning). These known systems typically are not able to incorporate RTK signals from moving base stations. In contrast to known systems, examples can advantageously enable these vehicles to receive RTK signals from a base station that is not stationary. According to examples disclosed herein, a mobile base station can generate RTK signals as if the base station was stationary, which is known as the aforementioned virtual reference station or VRS. Also according to the examples disclosed herein, the mobile base station need not be at the same altitude or position as the VRS, enabling airborne mobile base in contrast to known implementations. Accordingly, examples disclosed herein enable generation of RTK signals from a stationary VRS that allow for RTK positioning on all types of RTK enabled GNS receivers, even those not specifically designed for mobile RTK base stations.

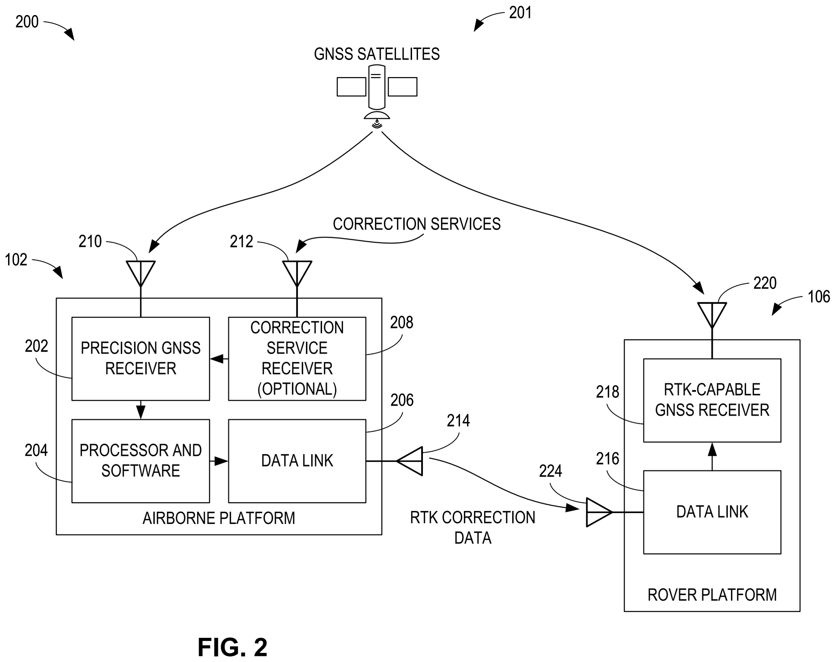

FIG. 2 is a schematic overview of an example communication system 200 that can be implemented in examples disclosed herein. The communication system 200 of the illustrated example utilizes GNSS data transmitted from at least one satellite 201. The example communication system 200 includes the mobile base station 102 which, in turn, includes a precision GNSS receiver 202, a processor (e.g., a processor to execute software, processor circuitry, a processor device, a processing system, etc.) 204, and data link circuitry 206. The example antenna configuration shown in FIG. 2 is only an example and any other appropriate number of antennas can be implemented instead. Additionally or alternatively, the example mobile base station 102 includes a correction service receiver 208. According to some examples disclosed herein, an antenna 210 corresponds to the precision GNSS receiver 202, an antenna 212 corresponds to the correction service receiver 208 and an antenna 214 corresponds to the aforementioned data link circuitry 206. As can be seen in the illustrated example, the communication system 200 includes the example rover platform 106. In turn, the example rover platform 106 includes a data link 216 and an RTK-capable GNSS receiver 218. In this example, an antenna 220 corresponds to the RTK-capable GNSS receiver 218 while an antenna 224 corresponds to the data link 216.

In operation, the precision GNSS receiver 202 of the base station 102 is provided with a GNSS signal from the satellites 201 via the antenna 210. In turn, the processor 204 generates the required GNSS signal adjustments for creating a VRS while taking into account a motion (e.g., a flight motion, a flight path, etc.) of the mobile base station 102, a difference in atmospheric delay (e.g., tropospheric delay, etc.) between the mobile base station and the VRS, differences in position between the mobile base station and the GNSS satellite motion, etc. According to examples disclosed herein, adjustment and/or corrections to the GNSS observations can be provided as VRS observations to the data link 216 of the rover platform 106. As a result, the rover platform 106 can obtain GNSS observation data from the base station 102 as if the rover platform were receiving GNSS observation data from a stationary RTK base station. In contrast to known RTK-based systems, examples disclosed herein enable an RTK base station that can be non-stationary (e.g., in flight, airborne, seaborne, etc.) and at disparate altitudes.

In some examples, the base station 102 utilizes the aforementioned correction service receiver 208 to enable the base station 102 to accurately determine its own position (a key requirement to generating the VRS). Alternatively, the mobile base station 102 could utilize other means to accurately determine its position such as externally referenced systems, pseudo satellite systems, another RTK base station, navigation grade IMU, etc. In some examples, the base station 102 utilizes the aforementioned correction service receiver 208 to provide information on the GNSS error sources that could be utilized to further refine the aforementioned VRS observations used by the rover platform 106. This information includes but is not limited to tropospheric delays, satellite clock errors, satellite ephemeris errors, etc.

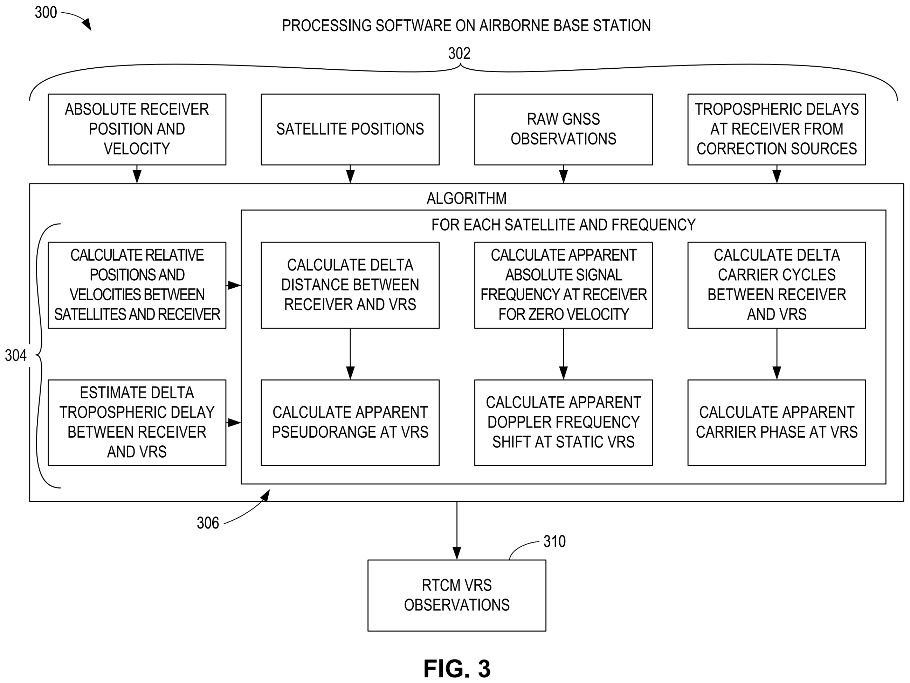

FIG. 3 is an example process flow 300 that can be implemented in examples disclosed herein. In the illustrated example of FIG. 3, inputs/parameters 302 corresponding to a mobile base station (e.g., the mobile base station 102, an airborne platform, etc.) are utilized for generation of VRS observations for utilization by a rover platform (e.g., the rover platform 106 with an RTK-capable GNSS receiver, etc.). In this example, the inputs include, but are not limited to, absolute position and velocity of the mobile base station and/or a receiver of the mobile base station, satellite positions, raw GNSS observations/data, and tropospheric delays at the mobile base station and/or the receiver of the mobile base station. However, any other appropriate input(s) can be utilized instead in addition to and/or in lieu of those listed.

According to examples disclosed herein, calculations 304 are performed. In particular, a relative position and/or a relative velocity between the mobile base station (e.g., a receiver of the mobile base station, etc.) and satellites of a GNSS is calculated. Further, in this example, a delta/difference in atmospheric delay (e.g., tropospheric delay, etc.) between the mobile base station (e.g., a receiver of the mobile base station, etc.) and a virtual base station, which is denoted in FIG. 3 as a VRS, is calculated and/or estimated.

For generation of VRS observations, an example algorithm performs calculations 306 for each satellite and frequency of the aforementioned GNSS system. In the illustrated example of FIG. 3, a difference/delta in distance between the receiver of the mobile base station and the VRS is calculated and, in turn, an apparent pseudorange of the VRS is calculated. Further, an apparent absolute signal frequency for the receiver of the mobile base station being assumed to be at zero velocity is calculated and, as a result, an apparent doppler shift frequency shift of the VRS is calculated with the assumption that the VRS is stationary, for example. According to examples disclosed herein, a difference/delta between carrier cycles of the receiver of the mobile base station and the VRS is calculated and an apparent carrier phase at the VRS is determined. As a result, observations 310 of the VRS, which may correspond to the Radio Technical Commission for Maritime Services (RTCM) standard for example, are determined.

In this example, a VRS observation (e.g., a virtual RTK signal) taking into account numerous parameters with respect to virtualization of the VRS is calculated/determined. The VRS observation can take into account parameters including, but is not limited to, the apparent pseudorange of the VRS, the apparent doppler frequency shift corresponding to the VRS and the apparent carrier phase at the VRS, etc. However, the VRS observations can take into account any other appropriate parameter/factor. In this example, the observations 310 are provided to the rover platform as RTK signals for navigation thereof.

The calculations and topography shown in examples disclosed are only examples and any other appropriate calculations or topography can be implemented instead. Further, any other appropriate sequence of calculations and/or determinations can be performed.

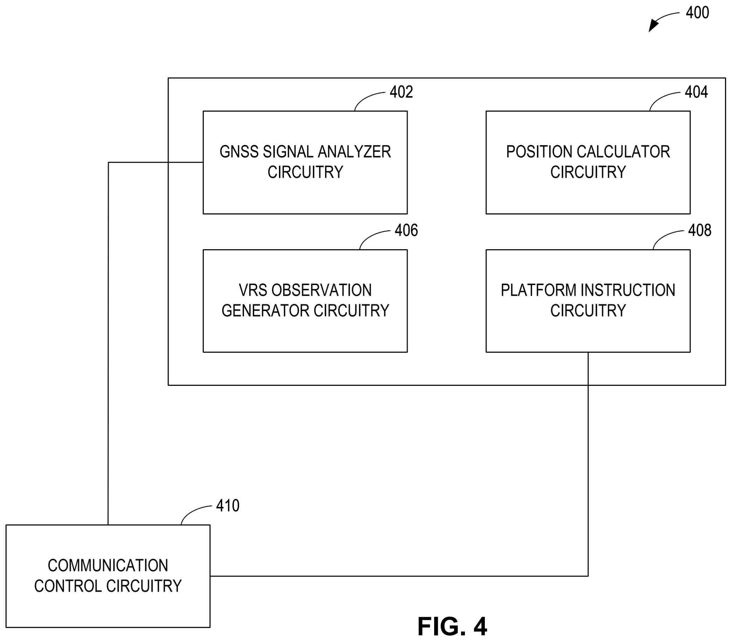

FIG. 4 is a block diagram of an example navigation system 400 to determine VRS observations that are sent from a mobile base station (e.g., the mobile base station 102) to a rover platform, such as a rover platform (e.g., the rover platform 106). According to examples disclosed herein, the example navigation system 400 can be implemented in a mobile base station 102 shown in FIG. 1 and/or the processor 204 shown in FIG. 2. The navigation system 400 of FIG. 4 may be instantiated (e.g., creating an instance of, bring into being for any length of time, materialize, implement, etc.) by programmable circuitry such as a Central Processor Unit (CPU) executing first instructions. Additionally or alternatively, the navigation system 400 of FIG. 4 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 4 may, thus, be instantiated at the same or different times. Some or all of the circuitry of FIG. 4 may be instantiated, for example, in one or more threads executing concurrently on hardware and/or in series on hardware. Moreover, in some examples, some or all of the circuitry of FIG. 4 may be implemented by microprocessor circuitry executing instructions and/or FPGA circuitry performing operations to implement one or more virtual machines and/or containers.

The example navigation system 400 includes example GNSS signal analyzer circuitry 402, example position calculator circuitry 404, example VRS observation generator circuitry 406, example platform instruction circuitry 408 and example communication control circuitry 410.

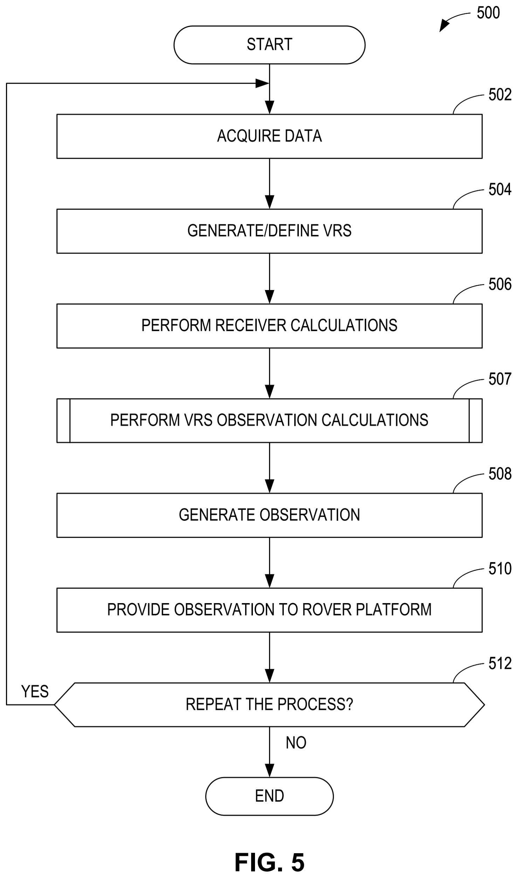

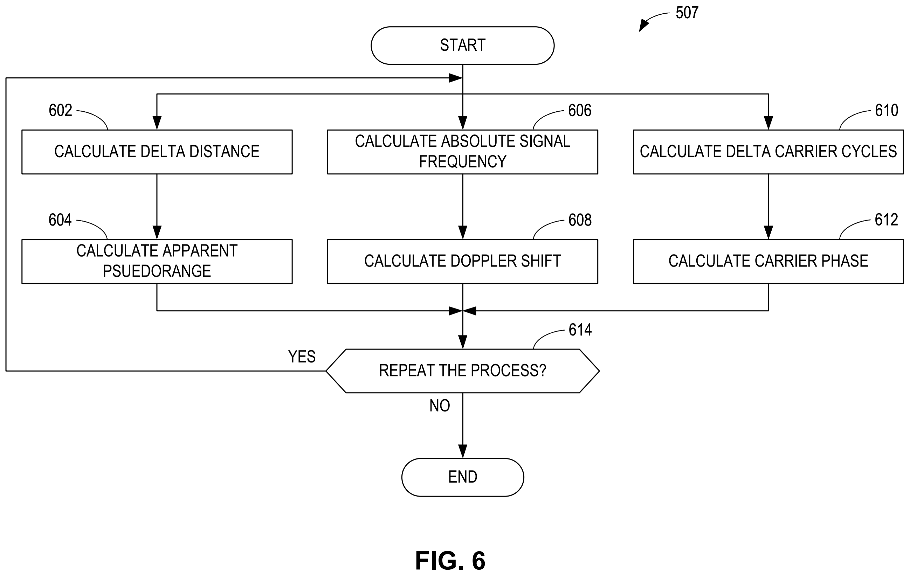

In the illustrated example of FIG. 4, the GNSS signal analyzer circuitry 402 is implemented to process, analyze and/or extract data from raw GNSS signals received at a GNSS receiver of the mobile base station. Accordingly, the example GNSS signal analyzer circuitry 402 can utilize raw GNSS data/observations and/or GNSS correction data of a precision point position (PPP) system received at the mobile base station. In some examples, the position calculator circuitry is instantiated by programmable circuitry executing position calculator circuitry instructions and/or is configured to perform operations such as those represented by the flowcharts of FIGS. 5 and 6.

The example position calculator circuitry 404 determines an absolute position and/or absolute velocity of the mobile base station. For example, the position calculator circuitry 404 utilizes high precision GNSS data received from a precision GNSS receiver to determine at least one of an absolute position and/or an absolute velocity of a GNSS receiver and/or the mobile base station carrying the GNSS receiver. Further, the example position calculator circuitry 404 can also determine relative positions and/or velocities between the mobile base station and a VRS established and/or generated by the mobile base station. According to examples disclosed herein, the position calculator circuitry 404 can determine satellite positions of the GNSS system, etc. In some examples, the position calculator circuitry 404 is instantiated by programmable circuitry executing position calculator circuitry instructions and/or is configured to perform operations such as those represented by the flowcharts of FIGS. 5 and 6.

According to examples disclosed herein, the VRS observation generator circuitry 406 determines a variation in reception of the GNSS signals between the mobile base station and the VRS for generation of VRS observations to be provided to the rover platform for navigation thereof. Particularly, the VRS observation generator circuitry 406 generates, based on the aforementioned variation in reception, the VRS observations. In turn, the VRS observations are transmitted to the rover platform to simulate and/or mimic an GNSS observations being transmitted from a stationary RTK base station that separated from the mobile base station by a distance. In this example, the VRS observation generator circuitry 406 takes into account the motion of the mobile base station (e.g., the mobile base station in flight, etc.) and the difference in tropospheric delay between the mobile base station (e.g., a receiver of the mobile base station, etc.) and the VRS, or any other appropriate parameter. The example VRS observation generator circuitry 406 performs calculations for each satellite and frequency such that a difference/delta in distance between the receiver of the mobile base station and the VRS is calculated and, in turn, an apparent pseudorange of the VRS is calculated. Further, the example VRS observation generator circuitry 406 calculates an apparent absolute signal frequency for the mobile base station (at an assumed zero velocity) as well as an apparent Doppler frequency shift of the assumed static VRS. According to examples disclosed herein, the example VRS observation generator circuitry 406 calculates a difference/delta between the mobile base station (e.g., the receiver of the mobile base station, etc.) and the VRS to determine an apparent carrier phase at the VRS. According to examples disclosed herein, the VRS observation generator circuitry 406 calculates observations of the VRS based on the apparent pseudorange, the apparent doppler frequency shift and the apparent carrier phase corresponding to the VRS. In some examples, the VRS observation generator circuitry 406 is instantiated by programmable circuitry executing VRS observation generator instructions and/or is configured to perform operations such as those represented by the flowcharts of FIGS. 5 and 6.

According to some examples disclosed herein, the platform instruction circuitry 408 processes and/or utilizes the observations to generate VRS observations for use by the rover platform for navigation thereof. In some such examples, the platform instruction circuitry 408 adapts the aforementioned correction/observation signals to VRS observation signals to simulate and/or mimic GNSS observations being transmitted from the VRS. In some examples, the VRS observation signals (e.g., GNSS observation signals) are generated in the RTCM standard. However, any other appropriate standard and/or protocol may be utilized instead. In some examples, the platform instruction circuitry 408 is instantiated by programmable circuitry executing platform instruction circuitry instructions and/or is configured to perform operations such as those represented by the flowcharts of FIGS. 5 and 6.

The example communication control circuitry 410 controls and/or directs a transmitter/transceiver of the mobile base station to transmit the aforementioned VRS observations to the rover platform. As a result, the VRS observations are utilized by the rover platform for navigation thereof. In some examples, the communication control circuitry 410 is instantiated by programmable circuitry executing communication control circuitry instructions and/or is configured to perform operations such as those represented by the flowcharts of FIGS. 5 and 6.

While an example manner of implementing the navigation analysis system 400 of FIG.4 is illustrated in FIG. 4, one or more of the elements, processes, and/or devices illustrated in FIG. 4 may be combined, divided, re-arranged, omitted, eliminated, and/or implemented in any other way. Further, the example GNSS signal analyzer circuitry 402, the example position calculator circuitry 404, the example VRS observation generator circuitry 406, the example platform instruction circuitry 408, the example communication control circuitry 410, and/or, more generally, the example navigation analysis system 400 of FIG. 4, may be implemented by hardware alone or by hardware in combination with software and/or firmware. Thus, for example, any of the example GNSS signal analyzer circuitry 402, the example position calculator circuitry 404, the example VRS observation generator circuitry 406, the example platform instruction circuitry 408, the example communication control circuitry 410, and/or, more generally, the example navigation analysis system 400, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example navigation analysis system 400 of FIG. 4 may include one or more elements, processes, and/or devices in addition to, or instead of, those illustrated in FIG. 4, and/or may include more than one of any or all of the illustrated elements, processes and devices.

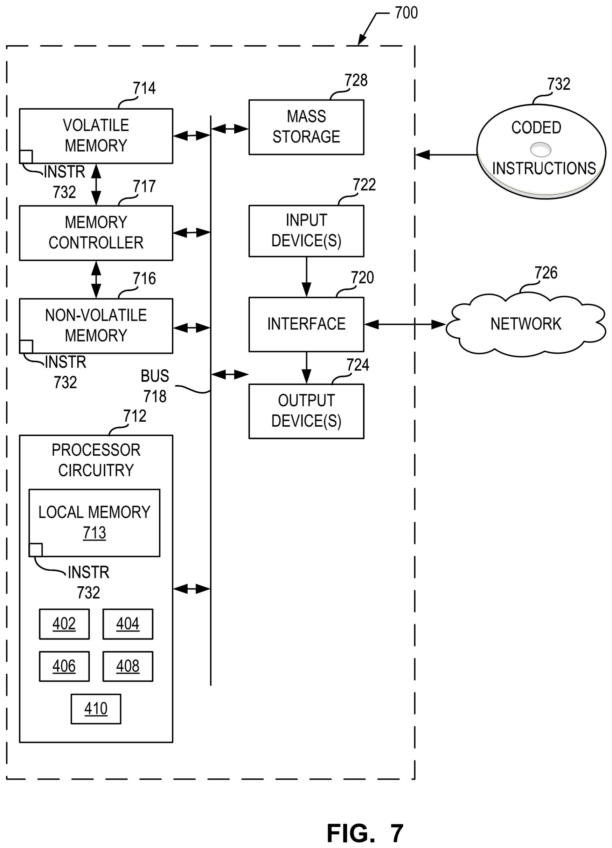

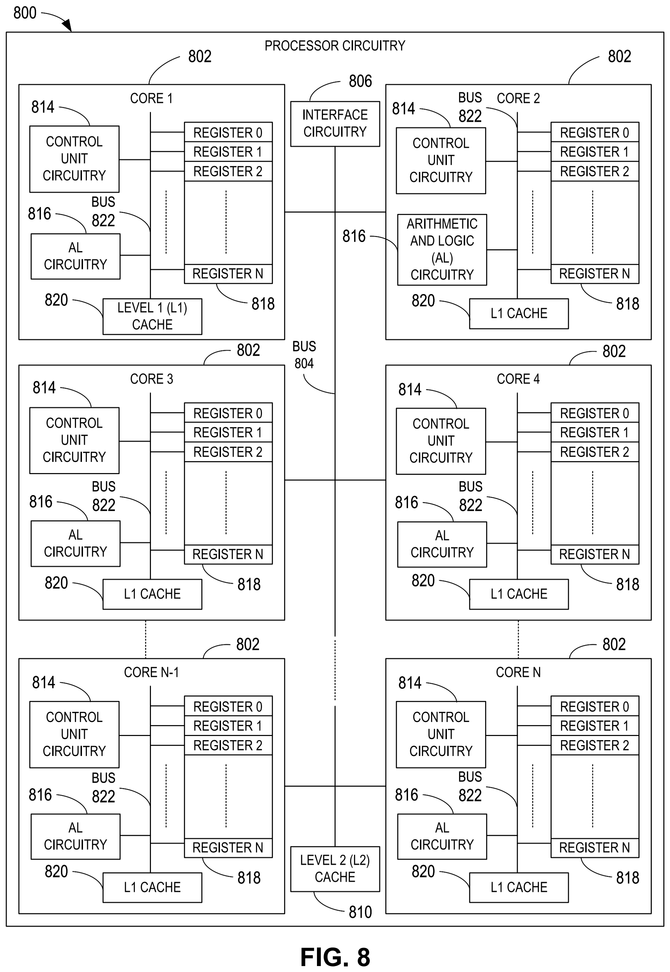

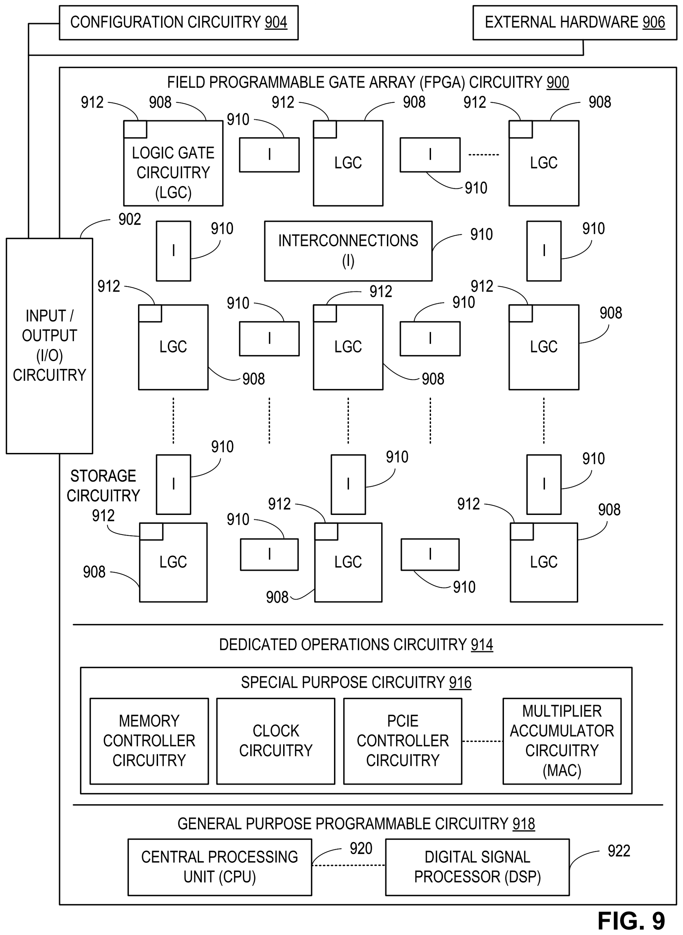

Flowcharts representative of example machine readable instructions, which may be executed by programmable circuitry to implement and/or instantiate the navigation analysis system 400 of FIG. 4 and/or representative of example operations which may be performed by programmable circuitry to implement and/or instantiate the navigation analysis system 400 of FIG. 4, are shown in FIGS. 5 and 6. The machine readable instructions may be one or more executable programs or portion(s) of one or more executable programs for execution by programmable circuitry such as the programmable circuitry 712 shown in the example processor platform 700 discussed below in connection with FIG. 7 and/or may be one or more function(s) or portion(s) of functions to be performed by the example programmable circuitry (e.g., an FPGA) discussed below in connection with FIGS. 8 and/or 9. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart illustrated in FIGS. 5 and 6, many other methods of implementing the example navigation analysis system 400 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 5 and 6 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 5 is a flowchart representative of example machine readable instructions and/or example operations 500 that may be executed, instantiated, and/or performed by programmable circuitry to guide a rover platform by way of a VRS observation base station that is generated/constructed by a mobile base station, which is an aircraft in this example. The example machine-readable instructions and/or the example operations 500 of FIG. 3 begin at block 502, at which the example GNSS signal analyzer circuitry 402 acquires GNSS data.

According to examples disclosed herein, example GNSS signal analyzer circuitry 402 receives and/or accesses a precision GNSS signal. Additionally or alternatively, the example GNSS signal analyzer circuitry 402 receives and/or accesses correction data (e.g., from a correction source).

At block 504, the example position calculator circuitry 404 and/or the example VRS observation generator circuitry 406 generates and/or defines the VRS. In the illustrated example of FIG. 5, the VRS observation generator circuitry 406 generates, defines and/or presumes a VRS that is stationary relative to the rover platform. In this example, the VRS observation generator circuitry 406 generates a mathematical construction/expression/representation of the VRS even though the VRS does not physically exist.

At block 506, the example position calculator circuitry 404 performs receiver calculations. According to examples disclosed herein, the position calculator circuitry 404 determines at least one position and/or velocity of the mobile base station. In this example, the position calculator circuitry 404 determines a precise position and/or velocity of the mobile base station (e.g., via a PPP receiver). According to some examples disclosed herein, the example position calculator circuitry 404 estimates a delay. In this example, the delay corresponds to an atmospheric delay (e.g., a tropospheric delay) between the receiver of the base station platform and the VRS.

At block 507, as will be discussed in greater detail below in connection with FIG. 6, the example VRS observation generator circuitry 406 generates and/or determines an observation. According to some examples disclosed herein, the VRS observation generator circuitry 406 determines a variation, shift and/or an error of a GNSS signal between the receiver of the mobile base station and the VRS for determination of the observation.

At block 508, in some examples, the example VRS observation generator circuitry 406 and/or the example platform instruction circuitry 408 determines/generates VRS observations (e.g., a virtual signal/observation, etc.) based on the variation, shift and/or error between the receiver of the mobile base station and the VRS. According to examples disclosed herein, the VRS observations correspond to signals that an RTK system of the rover platform would have received from a stationary base station.

At block 510, in some examples, the example platform instruction circuitry 408 causes a transmitter and/or transceiver to provide (e.g., transmit, cause transmission, etc.) the VRS observations as a signal to the rover platform for navigation thereof.

At block 512, it is determined by the example platform instruction circuitry 408 and/or the example communication control circuitry 410 whether to repeat the process. If the process is to be repeated (block 512), control of the process returns to block 502. Otherwise, the process ends. The determination of whether the process is to be repeated may be based on whether the rover platform necessitates further navigation and/or whether the mobile base station is to continue operating as a mobile base station.

FIG. 6 is a flowchart representative of example machine readable instructions and/or example operations 507 that may be executed, instantiated, and/or performed by programmable circuitry to determine observations corresponding to an error, offset and/or variation in the reception of GNSS signals between a mobile base station and a VRS (e.g., a defined/constructed/presumed VRS).

At block 602, the VRS observation generator circuitry 406 of the illustrated example calculates a delta distance between a receiver of the mobile base station and the aforementioned VRS.

At block 604, according to examples disclosed herein, the VRS observation generator circuitry 406 calculates an apparent pseudorange at the VRS.

At block 606, the example VRS observation generator circuitry 406 calculates an absolute signal frequency at the receiver of the mobile base station with an assumed zero velocity.

At block 608, the VRS observation generator circuitry 406 of the illustrated example calculates a Doppler frequency shift at the static VRS.

At block 610, the example VRS observation generator circuitry 406 calculates delta carrier cycles between the receiver and the VRS.

At block 612, according to examples disclosed herein, the VRS observation generator circuitry 406 calculates an apparent carrier phase of the VRS.

At block 614, it is determined by the example VRS observation generator circuitry 406 whether to repeat the process. If the process is to be repeated (block 614), control of the process returns to block 602. Otherwise, the process ends/returns to the example process shown in FIG. 5.

Any of the aspects shown and described in connection with FIG. 2 can be implemented in the example processes shown in FIG. 5 and/or 6.

FIG. 7 is a block diagram of an example programmable circuitry platform 700 structured to execute and/or instantiate the example machine-readable instructions and/or the example operations of FIGS. 5 and 6 to implement the navigation analysis system 400 of FIG. 4. The programmable circuitry platform 700 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 700 of the illustrated example includes programmable circuitry 712. The programmable circuitry 712 of the illustrated example is hardware. For example, the programmable circuitry 712 can be implemented by one or more integrated circuits, logic circuits, FPGAs, microprocessors, CPUs, GPUs, DSPs, and/or microcontrollers from any desired family or manufacturer. The programmable circuitry 712 may be implemented by one or more semiconductor based (e.g., silicon based) devices. In this example, the programmable circuitry 712 implements the example GNSS signal analyzer circuitry 402, the example position calculator circuitry 404, the example VRS observation generator circuitry 406, the example platform instruction circuitry 408, and the example communication control circuitry 410.

The programmable circuitry 712 of the illustrated example includes a local memory 713 (e.g., a cache, registers, etc.). The programmable circuitry 712 of the illustrated example is in communication with main memory 714, 716, which includes a volatile memory 714 and a non-volatile memory 716, by a bus 718. The volatile memory 714 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 716 may be implemented by flash memory and/or any other desired type of memory device. Access to the main memory 714, 716 of the illustrated example is controlled by a memory controller 717. In some examples, the memory controller 717 may be implemented by one or more integrated circuits, logic circuits, microcontrollers from any desired family or manufacturer, or any other type of circuitry to manage the flow of data going to and from the main memory 714, 716.

The programmable circuitry platform 700 of the illustrated example also includes interface circuitry 720. The interface circuitry 720 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 722 are connected to the interface circuitry 720. The input device(s) 722 permit(s) a user (e.g., a human user, a machine user, etc.) to enter data and/or commands into the programmable circuitry 712. The input device(s) 722 can be implemented by, for example, an audio sensor, a microphone, a camera (still or video), a keyboard, a button, a mouse, a touchscreen, a trackpad, a trackball, an isopoint device, and/or a voice recognition system.

One or more output devices 724 are also connected to the interface circuitry 720 of the illustrated example. The output device(s) 724 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 720 of the illustrated example, thus, typically includes a graphics driver card, a graphics driver chip, and/or graphics processor circuitry such as a GPU.

The interface circuitry 720 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 726. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 700 of the illustrated example also includes one or more mass storage discs or devices 728 to store firmware, software, and/or data. Examples of such mass storage discs or devices 728 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 732, which may be implemented by the machine readable instructions of FIGS. 5 and 6, may be stored in the mass storage device 728, in the volatile memory 714, in the non-volatile memory 716, and/or on at least one non-transitory computer readable storage medium such as a CD or DVD which may be removable.

FIG. 8 is a block diagram of an example implementation of the programmable circuitry 712 of FIG. 7. In this example, the programmable circuitry 712 of FIG. 7 is implemented by a microprocessor 800. For example, the microprocessor 800 may be a general-purpose microprocessor (e.g., general-purpose microprocessor circuitry). The microprocessor 800 executes some or all of the machine-readable instructions of the flowcharts of FIGS. 5 and 6 to effectively instantiate the circuitry of FIG. 4 as logic circuits to perform operations corresponding to those machine readable instructions. In some such examples, the circuitry of FIG. 4 is instantiated by the hardware circuits of the microprocessor 800 in combination with the machine-readable instructions. For example, the microprocessor 800 may be implemented by multi-core hardware circuitry such as a CPU, a DSP, a GPU, an XPU, etc. Although it may include any number of example cores 802 (e.g., 1 core), the microprocessor 800 of this example is a multi-core semiconductor device including N cores. The cores 802 of the microprocessor 800 may operate independently or may cooperate to execute machine readable instructions. For example, machine code corresponding to a firmware program, an embedded software program, or a software program may be executed by one of the cores 802 or may be executed by multiple ones of the cores 802 at the same or different times. In some examples, the machine code corresponding to the firmware program, the embedded software program, or the software program is split into threads and executed in parallel by two or more of the cores 802. The software program may correspond to a portion or all of the machine readable instructions and/or operations represented by the flowcharts of FIGS. 5 and 6.

The cores 802 may communicate by a first example bus 804. In some examples, the first bus 804 may be implemented by a communication bus to effectuate communication associated with one(s) of the cores 802. For example, the first bus 804 may be implemented by at least one of an Inter-Integrated Circuit (I2C) bus, a Serial Peripheral Interface (SPI) bus, a PCI bus, or a PCIe bus. Additionally or alternatively, the first bus 804 may be implemented by any other type of computing or electrical bus. The cores 802 may obtain data, instructions, and/or signals from one or more external devices by example interface circuitry 806. The cores 802 may output data, instructions, and/or signals to the one or more external devices by the interface circuitry 806. Although the cores 802 of this example include example local memory 820 (e.g., Level 1 (L1) cache that may be split into an L1 data cache and an L1 instruction cache), the microprocessor 800 also includes example shared memory 810 that may be shared by the cores (e.g., Level 2 (L2 cache)) for high-speed access to data and/or instructions. Data and/or instructions may be transferred (e.g., shared) by writing to and/or reading from the shared memory 810. The local memory 820 of each of the cores 802 and the shared memory 810 may be part of a hierarchy of storage devices including multiple levels of cache memory and the main memory (e.g., the main memory 714, 716 of FIG. 7). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 802 may be referred to as a CPU, DSP, GPU, etc., or any other type of hardware circuitry. Each core 802 includes control unit circuitry 814, arithmetic and logic (AL) circuitry (sometimes referred to as an ALU) 816, a plurality of registers 818, the local memory 820, and a second example bus 822. Other structures may be present. For example, each core 802 may include vector unit circuitry, single instruction multiple data (SIMD) unit circuitry, load/store unit (LSU) circuitry, branch/jump unit circuitry, floating-point unit (FPU) circuitry, etc. The control unit circuitry 814 includes semiconductor-based circuits structured to control (e.g., coordinate) data movement within the corresponding core 802. The AL circuitry 816 includes semiconductor-based circuits structured to perform one or more mathematic and/or logic operations on the data within the corresponding core 802. The AL circuitry 816 of some examples performs integer based operations. In other examples, the AL circuitry 816 also performs floating-point operations. In yet other examples, the AL circuitry 816 may include first AL circuitry that performs integer-based operations and second AL circuitry that performs floating-point operations. In some examples, the AL circuitry 816 may be referred to as an Arithmetic Logic Unit (ALU).

The registers 818 are semiconductor-based structures to store data and/or instructions such as results of one or more of the operations performed by the AL circuitry 816 of the corresponding core 802. For example, the registers 818 may include vector register(s), SIMD register(s), general-purpose register(s), flag register(s), segment register(s), machine-specific register(s), instruction pointer register(s), control register(s), debug register(s), memory management register(s), machine check register(s), etc. The registers 818 may be arranged in a bank as shown in FIG. 8. Alternatively, the registers 818 may be organized in any other arrangement, format, or structure, such as by being distributed throughout the core 802 to shorten access time. The second bus 822 may be implemented by at least one of an I2C bus, a SPI bus, a PCI bus, or a PCIe bus.

Each core 802 and/or, more generally, the microprocessor 800 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 800 is a semiconductor device fabricated to include many transistors interconnected to implement the structures described above in one or more integrated circuits (ICs) contained in one or more packages.

The microprocessor 800 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 800, in the same chip package as the microprocessor 800 and/or in one or more separate packages from the microprocessor 800.

FIG. 9 is a block diagram of another example implementation of the programmable circuitry 712 of FIG. 7. In this example, the programmable circuitry 712 is implemented by FPGA circuitry 900. For example, the FPGA circuitry 900 may be implemented by an FPGA. The FPGA circuitry 900 can be used, for example, to perform operations that could otherwise be performed by the example microprocessor 800 of FIG. 8 executing corresponding machine readable instructions. However, once configured, the FPGA circuitry 900 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 800 of FIG. 8 described above (which is a general purpose device that may be programmed to execute some or all of the machine readable instructions represented by the flowcharts of FIGS. 5 and 6 but whose interconnections and logic circuitry are fixed once fabricated), the FPGA circuitry 900 of the example of FIG. 9 includes interconnections and logic circuitry that may be configured, structured, programmed, and/or interconnected in different ways after fabrication to instantiate, for example, some or all of the operations/functions corresponding to the machine readable instructions represented by the flowcharts of FIGS. 5 and 6. In particular, the FPGA circuitry 900 may be thought of as an array of logic gates, interconnections, and switches. The switches can be programmed to change how the logic gates are interconnected by the interconnections, effectively forming one or more dedicated logic circuits (unless and until the FPGA circuitry 900 is reprogrammed). The configured logic circuits enable the logic gates to cooperate in different ways to perform different operations on data received by input circuitry. Those operations may correspond to some or all of the instructions (e.g., the software and/or firmware) represented by the flowcharts of FIGS. 5 and 6. As such, the FPGA circuitry 900 may be configured and/or structured to effectively instantiate some or all of the operations/functions corresponding to the machine readable instructions of the flowcharts of FIGS. 5 and 6 as dedicated logic circuits to perform the operations/functions corresponding to those software instructions in a dedicated manner analogous to an ASIC. Therefore, the FPGA circuitry 900 may perform the operations/functions corresponding to the some or all of the machine readable instructions of FIGS. 5 and 6 faster than the general-purpose microprocessor can execute the same.

In the example of FIG. 9, the FPGA circuitry 900 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 900 of FIG. 9 may access and/or load the binary file to cause the FPGA circuitry 900 of FIG. 9 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 900 of FIG. 9 to cause configuration and/or structuring of the FPGA circuitry 900 of FIG. 9, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 900 of FIG. 9 may access and/or load the binary file to cause the FPGA circuitry 900 of FIG. 9 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 900 of FIG. 9 to cause configuration and/or structuring of the FPGA circuitry 900 of FIG. 9, or portion(s) thereof.

The FPGA circuitry 900 of FIG. 9, includes example input/output (I/O) circuitry 902 to obtain and/or output data to/from example configuration circuitry 904 and/or external hardware 906. For example, the configuration circuitry 904 may be implemented by interface circuitry that may obtain a binary file, which may be implemented by a bit stream, data, and/or machine-readable instructions, to configure the FPGA circuitry 900, or portion(s) thereof. In some such examples, the configuration circuitry 904 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 906 may be implemented by external hardware circuitry. For example, the external hardware 906 may be implemented by the microprocessor 800 of FIG. 8.

The FPGA circuitry 900 also includes an array of example logic gate circuitry 908, a plurality of example configurable interconnections 910, and example storage circuitry 912. The logic gate circuitry 908 and the configurable interconnections 910 are configurable to instantiate one or more operations/functions that may correspond to at least some of the machine readable instructions of FIGS. 5 and 6 and/or other desired operations. The logic gate circuitry 908 shown in FIG. 9 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 908 to enable configuration of the electrical structures and/or the logic gates to form circuits to perform desired operations/functions. The logic gate circuitry 908 may include other electrical structures such as look-up tables (LUTs), registers (e.g., flip-flops or latches), multiplexers, etc.

The configurable interconnections 910 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 908 to program desired logic circuits.

The storage circuitry 912 of the illustrated example is structured to store result(s) of the one or more of the operations performed by corresponding logic gates. The storage circuitry 912 may be implemented by registers or the like. In the illustrated example, the storage circuitry 912 is distributed amongst the logic gate circuitry 908 to facilitate access and increase execution speed.

The example FPGA circuitry 900 of FIG. 9 also includes example dedicated operations circuitry 914. In this example, the dedicated operations circuitry 914 includes special purpose circuitry 916 that may be invoked to implement commonly used functions to avoid the need to program those functions in the field. Examples of such special purpose circuitry 916 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 900 may also include example general purpose programmable circuitry 918 such as an example CPU 920 and/or an example DSP 922. Other general purpose programmable circuitry 918 may additionally or alternatively be present such as a GPU, an XPU, etc., that can be programmed to perform other operations.

Although FIGS. 8 and 9 illustrate two example implementations of the programmable circuitry 712 of FIG. 7, many other approaches are contemplated. For example, FPGA circuitry may include an on-board CPU, such as one or more of the example CPU 920 of FIG. 8. Therefore, the programmable circuitry 712 of FIG. 7 may additionally be implemented by combining at least the example microprocessor 800 of FIG. 8 and the example FPGA circuitry 900 of FIG. 9. In some such hybrid examples, one or more cores 802 of FIG. 8 may execute a first portion of the machine readable instructions represented by the flowcharts of FIGS. 5 and 6 to perform first operation(s)/function(s), the FPGA circuitry 900 of FIG. 9 may be configured and/or structured to perform second operation(s)/function(s) corresponding to a second portion of the machine readable instructions represented by the flowcharts of FIG. 5 and 6, and/or an ASIC may be configured and/or structured to perform third operation(s)/function(s) corresponding to a third portion of the machine readable instructions represented by the flowcharts of FIGS. 5 and 6.

It should be understood that some or all of the circuitry of FIG. 4 may, thus, be instantiated at the same or different times. For example, same and/or different portion(s) of the microprocessor 800 of FIG. 8 may be programmed to execute portion(s) of machine-readable instructions at the same and/or different times. In some examples, same and/or different portion(s) of the FPGA circuitry 900 of FIG. 9 may be configured and/or structured to perform operations/functions corresponding to portion(s) of machine-readable instructions at the same and/or different times.

In some examples, some or all of the circuitry of FIG. 4 may be instantiated, for example, in one or more threads executing concurrently and/or in series. For example, the microprocessor 800 of FIG. 8 may execute machine readable instructions in one or more threads executing concurrently and/or in series. In some examples, the FPGA circuitry 900 of FIG. 9 may be configured and/or structured to carry out operations/functions concurrently and/or in series. Moreover, in some examples, some or all of the circuitry of FIG. 4 may be implemented within one or more virtual machines and/or containers executing on the microprocessor 800 of FIG. 8.

In some examples, the programmable circuitry 712 of FIG. 7 may be in one or more packages. For example, the microprocessor 800 of FIG. 8 and/or the FPGA circuitry 900 of FIG. 9 may be in one or more packages. In some examples, an XPU may be implemented by the programmable circuitry 712 of FIG. 7, which may be in one or more packages. For example, the XPU may include a CPU (e.g., the microprocessor 800 of FIG. 8, the CPU 920 of FIG. 9, etc.) in one package, a DSP (e.g., the DSP 922 of FIG. 9) in another package, a GPU in yet another package, and an FPGA (e.g., the FPGA circuitry 900 of FIG. 9) in still yet another package.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

Example 1 includes an apparatus to generate virtual reference station (VRS) observations for navigation of a rover platform, the apparatus comprising interface circuitry communicatively coupled to a receiver of the mobile base station, machine-readable instructions, and at least one processor circuit to be programmed by the machine-readable instructions to determine a variation in reception of global navigation satellite system (GNSS) signals between the mobile base station and a VRS, generate the VRS observations based on the determined variation, and cause transmission of the VRS observations to the rover platform for navigation thereof.

Example 2 includes the apparatus as defined in example 1, wherein the VRS is defined to be stationary and separated by a distance from the mobile base station.

Example 3 includes the apparatus as defined in any of examples 1 or 2, wherein one or more of the at least one processor circuit is to determine a difference in tropospheric delay between the mobile base station and the VRS to determine the variation.

Example 4 includes the apparatus as defined in any of examples 1 to 3, wherein the variation includes a Doppler frequency shift at the VRS, and wherein one or more of the at least one processor circuit is to generate the VRS observations based on the Doppler frequency shift at the VRS.

Example 5 includes the apparatus as defined in any of examples 1 to 4, wherein one or more of the at least one processor circuit is to generate the VRS observations based on a difference in distance between a receiver of the mobile base station and a defined location of the VRS.

Example 6 includes the apparatus as defined in any of examples 1 to 5, wherein the variation includes at least one of an apparent pseudorange at the VRS, an apparent Doppler frequency shift at the VRS, or an apparent carrier phase at the VRS.

Example 7 includes the apparatus as defined in any of examples 1 to 6, further including a precise point position (PPP) receiver of the mobile base station, and wherein an output of the PPP receiver is utilized to determine a position of the mobile base station.

Example 8 includes at least one non-transitory machine-readable medium comprising machine-readable instructions to cause at least one processor circuit to at least determine a variation in reception of global navigation satellite system (GNSS) signals between a mobile base station and a virtual reference station (VRS), generate VRS observations based on the determined variation, and cause a transmitter to provide the VRS observations to a rover platform for navigation thereof.

Example 9 includes the at least one non-transitory machine-readable medium as defined in example 8, wherein the VRS is defined to be stationary and separated by a distance from the mobile base station.

Example 10 includes the at least one non-transitory machine-readable medium as defined in any of examples 8 or 9, wherein the machine-readable instructions are to cause one or more of the at least one processor circuit to determine a difference in tropospheric delay between the mobile base station and the VRS to determine the variation.

Example 11 includes the at least one non-transitory machine-readable medium as defined in any of examples 8 to 10, wherein the variation includes a Doppler frequency shift, and wherein the machine-readable instructions are to cause one or more of the at least one processor circuit to generate the VRS observations at least based on the Doppler frequency shift at the VRS.

Example 12 includes the at least one non-transitory machine-readable medium as defined in any of examples 8 to 11, wherein the machine-readable instructions are to cause one or more of the at least one processor circuit to generate the VRS observations based on a relative distance between a receiver of the mobile base station and a defined location of the VRS.

Example 13 includes the at least one non-transitory machine-readable medium as defined in any of examples 8 to 12, wherein the machine-readable instructions are to cause one or more of the at least one processor circuit to cause a transmitter to transmit the VRS observations during movement of the mobile base station.

Example 14 includes the at least one non-transitory machine-readable medium as defined in any of examples 8 to 13, wherein the variation is determined based on movement of the mobile base station.

Example 15 includes the at least one non-transitory machine-readable medium as defined in any of examples 8 to 14, wherein the VRS observations correspond to a position designated for the VRS.

Example 16 includes the at least one non-transitory machine-readable medium as defined in any of examples 8 to 15, wherein the machine-readable instructions are to cause one or more of the at least one processor circuit to determine a first atmospheric delay at the mobile base station, and determine a difference between a second atmospheric delay of the VRS and the first atmospheric delay, wherein the determination of the variation is based on the difference.

Example 17 includes a method comprising determining a variation in reception of global navigation satellite system (GNSS) signals between a mobile base station and a virtual reference station (VRS), generating VRS observations based on the determined variation, and transmitting the VRS observations to a rover platform for navigation thereof.

Example 18 includes the method as defined in example 17, further including determining a difference in tropospheric delay between the mobile base station and the VRS for determination of the variation.

Example 19 includes the method as defined in any of examples 17 or 18, further including defining the VRS to be stationary and separated by a distance from the mobile base station.

Example 20 includes the method as defined in any of examples 17 to 19, further including determining a Doppler shift of the VRS to determine the variation.

Example methods, apparatus, systems, and articles of manufacture to enable accurate control of rover platforms without necessitating costly, heavy and space-consuming equipment are disclosed herein. Further examples and combinations thereof include the following:

From the foregoing, it will be appreciated that example systems, apparatus, articles of manufacture, and methods have been disclosed that enable precision navigation of vehicles, such as aircraft for example, without necessitating specialized equipment, thereby saving weight and space typically necessitated for precision navigation. Disclosed systems, apparatus, articles of manufacture, and methods improve the efficiency of using a computing device by reducing the need for computing resources typically necessitated for high precision navigation systems in vehicles, such as aircraft. Disclosed systems, apparatus, articles of manufacture, and methods are accordingly directed to one or more improvement(s) in the operation of a machine such as a computer or other electronic and/or mechanical device.

According to examples disclosed herein, an airborne base station can interact with a rover in a local vicinity. Examples disclosed herein can take into account a motion of an aircraft, and a difference in tropospheric delay. Examples disclosed herein create, generate and/or define a virtual RTK base station that does not physically exist. Accordingly, VRS observations are generated as if a stationary base station is present, rather than an airborne/mobile base station. To generate a virtual RTK base station, examples disclosed herein determine raw GNSS satellite signals and timing that the virtual station would experience and/or encounter if in physical existence. To that end, examples disclosed herein utilize a series of equations to convert airborne raw GNSS observations that account for motion of the aircraft through the air, motion of the GNSS satellite and variations in the tropospheric delay between the airborne base station and the virtual base station with respect to the estimated base station observations. The result is that at least one rover in the area receiving the observations can utilize the corrections as if they are transmitted from the virtual base station, and they can achieve relatively high positional accuracy (e.g., cm level accuracy, etc.) with an RTK implementation. Because RTK generates relative position information, an absolute position of the airborne RTK base station, which can be obtained via a PPP solution, is determined.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus (100) to generate virtual reference station, VRS, observations for navigation of a rover platform (106), the apparatus comprising:
interface circuitry (720) communicatively coupled to a receiver (218) of the mobile base station;
machine-readable instructions (732); and
at least one processor circuit (712) to be programmed by the machine-readable instructions to:
determine a variation in reception of global navigation satellite system, GNSS, signals between the mobile base station and a VRS (104);
generate the VRS observations based on the determined variation; and
cause transmission of the VRS observations to the rover platform for navigation thereof.

2. The apparatus as defined in claim 1, wherein the VRS is defined to be stationary and separated by a distance from the mobile base station.

3. The apparatus as defined in claim 1 or 2, wherein one or more of the at least one processor circuit is to determine a difference in tropospheric delay between the mobile base station and the VRS to determine the variation.

4. The apparatus as defined in any of claims 1 to 3, wherein the variation includes a Doppler frequency shift at the VRS, and wherein one or more of the at least one processor circuit is to generate the VRS observations based on the Doppler frequency shift at the VRS.

5. The apparatus as defined in any of claims 1 to 4, wherein one or more of the at least one processor circuit is to generate the VRS observations based on a difference in distance between a receiver of the mobile base station and a defined location of the VRS.

6. The apparatus as defined in any of claims 1 to 5, wherein the variation includes at least one of an apparent pseudorange at the VRS, an apparent Doppler frequency shift at the VRS, or an apparent carrier phase at the VRS.

7. The apparatus as defined in any of claims 1 to 6, further including a precise point position, PPP, receiver (202) of the mobile base station, and wherein an output of the PPP receiver is utilized to determine a position of the mobile base station.

8. At least one non-transitory machine-readable medium comprising machine-readable instructions to cause at least one processor circuit to at least:
determine a variation in reception of global navigation satellite system, GNSS, signals between a mobile base station and a virtual reference station, VRS;
generate VRS observations based on the determined variation; and
cause a transmitter to provide the VRS observations to a rover platform for navigation thereof.

9. The at least one non-transitory machine-readable medium as defined in claim 8, wherein the VRS is defined to be stationary and separated by a distance from the mobile base station.

10. The at least one non-transitory machine-readable medium as defined in claim 8 or 9, wherein the machine-readable instructions are to cause one or more of the at least one processor circuit to determine a difference in tropospheric delay between the mobile base station and the VRS to determine the variation.

11. The at least one non-transitory machine-readable medium as defined in any of claims 8 to 10, wherein the variation includes a Doppler frequency shift, and wherein the machine-readable instructions are to cause one or more of the at least one processor circuit to generate the VRS observations based on the Doppler frequency shift at the VRS.

12. The at least one non-transitory machine-readable medium as defined in any of claims 8 to 11, wherein the machine-readable instructions are to cause one or more of the at least one processor circuit to generate the VRS observations at least based on a relative distance between a receiver of the mobile base station and a defined location of the VRS.

13. The at least one non-transitory machine-readable medium as defined in any of claims 8 to 12, wherein the machine-readable instructions are to cause one or more of the at least one processor circuit to cause a transmitter to transmit the VRS observations during movement of the mobile base station.

14. The at least one non-transitory machine-readable medium as defined in any of claims 8 to 13, wherein the variation is determined based on movement of the mobile base station.

15. A method comprising:
determining a variation in reception of global navigation satellite system, GNSS, signals between a mobile base station and a virtual reference station, VRS;
generating VRS observations based on the determined variation; and
transmitting the VRS observations to a rover platform for navigation thereof.
